(19) Europäisches Patentamt
European Patent Office
Office européen des brevets

(11) **EP 4 410 548 A1**

(12) **EUROPEAN PATENT APPLICATION**
published in accordance with Art. 153(4) EPC

(43) Date of publication:
**07.08.2024 Bulletin 2024/32**

(21) Application number: **22875932.0**

(22) Date of filing: **20.09.2022**

(51) International Patent Classification (IPC):
**B32B 27/34** (2006.01)   **B32B 27/18** (2006.01)
**B65D 65/40** (2006.01)

(52) Cooperative Patent Classification (CPC):
**B32B 27/18; B32B 27/34; B65D 65/40;** Y02E 60/10

(86) International application number:
**PCT/JP2022/034983**

(87) International publication number:
**WO 2023/054062 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021   JP 2021161266**

(71) Applicant: Toyobo Co., Ltd.
**Kita-ku
Osaka-shi, Osaka 530-0001 (JP)**

(72) Inventors:
• UEDA, Kazushige
  **Inuyama-shi, Aichi 484-8508 (JP)**
• GOTO, Takamichi
  **Inuyama-shi, Aichi 484-8508 (JP)**
• ENDO, Takuro
  **Inuyama-shi, Aichi 484-8508 (JP)**

(74) Representative: **Vossius & Partner
Patentanwälte Rechtsanwälte mbB
Siebertstrasse 3
81675 München (DE)**

(54) **BIAXIALLY STRETCHED POLYAMIDE FILM AND PACKAGING MATERIAL**

(57)    An object of the present invention is to provide a biaxially stretched polyamide film which is superior in bending pinhole resistance and abrasion pinhole resistance, and can inhibit generation of foreign matter during film formation. A biaxially stretched polyamide film of the present invention includes at least two layers of A layer and B layer each formed of a resin composition including polyamide 6, wherein the A layer contains a flexing agent and the B layer is substantially free of any flexing agent, and the biaxially stretched polyamide film exhibits a loss elastic modulus E" of $1.1 \times 10^8$ Pa or more at 1°C in dynamic viscoelasticity measurement under conditions including a tensile mode, a distance between chucks of 20 mm, a frequency of 15 Hz, and a rate of raising temperature of 5°C/min using a viscoelasticity analyzer.

EP 4 410 548 A1

**Description**

TECHNICAL FIELD

The present invention relates to a biaxially stretched polyamide film to be suitably used for a food packaging film or the like, and a packaging material.

BACKGROUND ART

Hitherto, a biaxially stretched film made of an aliphatic polyamide typified by polyamide 6 is superior in impact resistance and bending pinhole resistance, and has been widely used as various packaging material films.

As a means for improving bending pinhole resistance, a film in which a polyamide-based elastomer is mixed with an aliphatic polyamide has been known (see, for example, Patent Document 1). This film is good in bending pinhole resistance and impact resistance in a low temperature environment, and pinholes due to bending fatigue are less likely to occur even in a low temperature environment. However, in the case of a film in which a polyamide-based elastomer is mixed with an aliphatic polyamide, the elastomer added during film production is thermally deteriorated, so that deteriorated matter called a die build-up is likely to be generated at the lip outlet of a die. There has been a problem that the deteriorated matter itself drops to yield a defective product, which decreases the production efficiency during continuous film production.

Patent Document 2 discloses a stretched film made of a polyamide-based resin composition containing 1 to 10% by mass of a polyester-based thermoplastic elastomer. These techniques afford superior bending resistance even in a low temperature environment, but even in these techniques, there is still room for improvement in the problem that a deteriorated matter called die build-up is easily generated at the lip outlet of a die because an elastomer component having low heat resistance is present on a surface layer.

RELATED ART DOCUMENTS

PATENT DOCUMENTS

Patent Document 1: JP-H-11-254615
Patent Document 2: WO 19/131752

SUMMARY OF THE INVENTION

PROBLEMS TO BE SOLVED BY THE INVENTION

Pinholes are generated not only by bending but also by friction (rubbing). A method for improving pinholes by bending and that for improving pinholes by friction are often contradictory. For example, when the flexibility of a film is increased, bending pinholes are less likely to occur, but pinholes due to friction tend to easily occur as the film becomes softer.

An object of the present invention is to provide a biaxially stretched polyamide film which is superior in resistance to pinholes due to bending (bending pinhole resistance) and resistance to pinholes due to repeated contact (abrasion pinhole resistance), is also superior in transparency and adhesive strength with a sealant film, and can inhibit generation of foreign matter during film formation.

SOLUTIONS TO THE PROBLEMS

As a result of intensive studies by the present inventors, it was found that a polyamide film whose loss elastic modulus E" at 1°C measured using a dynamic viscoelasticity analyzer is within a prescribed range is superior in bending pinhole resistance and abrasion pinhole resistance. Based on such a finding, further studies and improvements have been made, and an invention including one or more embodiments represented by the following has been accomplished.

[1] A biaxially stretched polyamide film comprising at least two layers of A layer and B layer each formed of a resin composition including polyamide 6,
wherein

the A layer contains a flexing agent and the B layer is substantially free of any flexing agent, and
the biaxially stretched polyamide film exhibits a loss elastic modulus E" of $1.1 \times 10^8$ Pa or more at 1°C in dynamic viscoelasticity measurement under conditions including a tensile mode, a distance between chucks of 20 mm, a frequency of 15 Hz, and a rate of raising temperature of 5°C/min using a viscoelasticity analyzer.

[2] The biaxially stretched polyamide film according to [1], wherein the flexing agent is an aliphatic aromatic copolymerized polyester.
[3] The biaxially stretched polyamide film according to [2], wherein the flexing agent is an aliphatic aromatic copolymerized polyester containing an adipic acid component.
[4] The biaxially stretched polyamide film according to any one of [1] to [3], wherein the B layer includes polymetaxylylene adipamide.
[5] The biaxially stretched polyamide film according to any one of [1] to [4], wherein the A layer and the B layer are laminated in an order of B layer/A layer/B layer.
[6] A packaging material comprising the biaxially stretched polyamide film according to any one of [1] to [5] and a sealant film.
[7] A battery packaging material comprising the biaxially stretched polyamide film according to any one of [1] to [5], a metal layer, and a sealant film.
[8] A packaging bag comprising the biaxially stretched polyamide film according to any one of [1] to [5].

EFFECTS OF THE INVENTION

The present invention can provide a biaxially stretched polyamide film, a packaging material, a battery packaging material, and a packaging bag which are superior in impact resistance, bending pinhole resistance, and friction pinhole resistance. In addition, since an elastomer component is not deteriorated inside a die, it is possible to inhibit adhesion of deteriorated matter to the inner surface of a die and the adhesion of die build-up to the die lip outlet, and it is possible to continuously produce a film for a long time.

BRIEF DESCRIPTION OF THE DRAWINGS

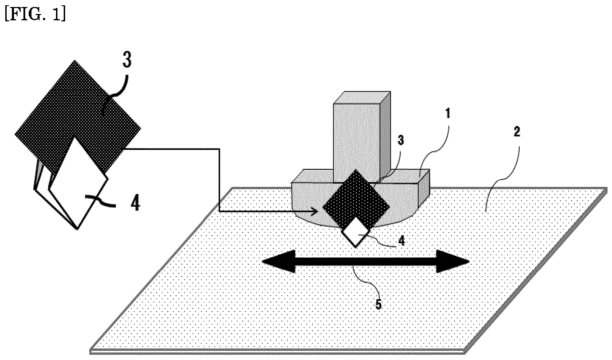

FIG. 1 is a schematic diagram illustrating a method for evaluating friction pinhole resistance.

MODE FOR CARRYING OUT THE INVENTION

A biaxially stretched polyamide film of one or more embodiments of the present invention is a biaxially stretched polyamide film including at least two layers formed of a resin composition including polyamide 6. The at least two layers may be either layers formed of the same resin composition or layers formed of different resin compositions. A preferred embodiment is a biaxially stretched polyamide film including at least A layer formed of a first resin composition and B layer formed of a second resin composition.
The biaxially stretched polyamide film of one or more embodiments of the present invention exhibits a loss elastic modulus E" of $1.1 \times 10^8$ Pa or more at 1°C in dynamic viscoelasticity measurement under conditions including a tensile mode, a distance between chucks of 20 mm, a frequency of 15 Hz, and a rate of raising temperature of 5°C/min using a viscoelasticity analyzer. The present inventors set, regarding the storage elastic modulus E' and the loss elastic modulus E" determined in the measurement of dynamic viscoelasticity of a polyamide film, the loss elastic modulus E" at 1°C to $1.1 \times 10^8$ Pa or more, thereby having made it possible to obtain a biaxially stretched polyamide film superior in all of impact resistance, bending pinhole resistance, and friction pinhole resistance. As one method of ensuring the loss elastic modulus E" at 1°C to be $1.1 \times 10^8$ Pa or more, in a biaxially stretched polyamide film having at least two layers of A layer and B layer, at least the A layer can contain a flexing agent.

[A layer]

The A layer can also be referred to as a base material layer. The first resin composition forming the A layer includes at least polyamide 6. The first resin composition preferably includes polyamide 6 in an amount of 80 parts by mass or more, more preferably 85 parts by mass or more based on 100 parts by mass of the first resin composition. Owing to including polyamide 6 in an amount of 80 parts by mass or more, a polyamide film having mechanical strength such as impact strength and gas barrier properties can be obtained. The upper limit of the content of polyamide 6 is preferably 99 parts by mass or less, more preferably 96 parts by mass or less based on 100 parts by mass of the first resin composition.
The first resin composition forming the A layer contains at least a flexing agent. The flexing agent is not particularly limited as long as it is a substance having an effect of imparting flexibility to the A layer, and examples thereof include thermoplastic elastomers such as polyester-based elastomers, polyamide-based elastomers, polyolefin-based elastomers, polystyrene-based elastomers, polyurethane-based elastomers, and polyvinyl chloride-based elastomers, ionomer polymers, aliphatic polyester resins, and aliphatic-aromatic polyester resins.

The flexing agent is preferably an aliphatic polyester resin or an aliphatic aromatic polyester resin. More preferred is an aliphatic polyester resin or aliphatic aromatic polyester resin having a glass transition temperature (Tg) of minus 30°C or less. When a polyester copolymer having a glass transition temperature of minus 30°C or less is used, superior pinhole resistance can be exhibited even in a freezing environment. As the aliphatic polyester resin, polybutylene succinate or polybutylene succinate adipate is preferably used. As the aliphatic aromatic polyester resin, an aliphatic aromatic polyester resin containing an adipic acid component is preferable, and polybutylene adipate terephthalate is particularly preferable.

The content of the flexing agent contained in the first resin composition forming the A layer is preferably 1 part by mass or more and 20 parts by mass or less, and more preferably 4 parts by mass or more and 15 parts by mass or less based on 100 parts by mass of the first resin composition. Owing to containing the flexing agent in an amount of 1 part by mass or more, the effect of bending pinhole resistance can be obtained. Owing to containing the flexing agent in an amount of 20 parts by mass or less, it is possible to prevent the film from being soft and from being lowered in piercing strength and impact strength. In addition, the film is easily stretchable, and it is also possible to prevent the occurrence of pitch deviation or the like during processing such as printing.

The first resin composition forming the A layer may further include a polyamide resin containing a part derived from biomass. Owing to including the polyamide resin containing a part derived from biomass, the bending pinhole resistance can be further improved. The content of the polyamide resin containing a part derived from biomass contained in the A layer is preferably 30 parts by mass or less, and more preferably 20 parts by mass or less based on 100 parts by mass of the first resin composition. When the content of the polyamide resin containing a part derived from biomass is 30 parts by mass or less, a homogeneous unstretched film can be obtained when a molten film is cast. As the polyamide resin containing a part derived from biomass that can be used for the A layer, polyamide 11, polyamide 610, polyamide 1010, and polyamide 410 are preferably used.

The first resin composition forming the A layer may include a thermoplastic resin other than polyamide 6 resin as long as the object of the present invention is not impaired. Examples of the thermoplastic resin include polyamide-based resins such as polyamide 12 resin, polyamide 66 resin, polyamide 6·12 copolymer resin, polyamide 6·66 copolymer resin, polyamide MXD6 resin, polyamide MXD10 resin, and polyamide 11·6T copolymer resin. If necessary, thermoplastic resins other than polyamide-based thermoplastic resins, for example, polyester-based polymers such as polyethylene terephthalate, polybutylene terephthalate and polyethylene-2,6-naphthalate, and polyolefin-based polymers such as polyethylene and polypropylene may be included.

The A layer may, as necessary, contain various additives such as other thermoplastic resins, lubricants, heat stabilizers, antioxidants, antistatic agents, antifogging agents, ultraviolet absorbers, dyes, and pigments.

[B layer]

The B layer can also be referred to as a functional layer. The second resin composition forming the B layer includes at least polyamide 6. The second resin composition preferably includes polyamide 6 in an amount of 70 parts by mass or more, more preferably 80 parts by mass or more, and particularly preferably 90 parts by mass or more based on 100 parts by mass of the second resin composition. Owing to including polyamide 6 in an amount of 70 parts by mass or more, a polyamide film having mechanical strength such as impact strength and gas barrier properties can be obtained. The upper limit of the content of polyamide 6 is preferably 99 parts by mass or less, more preferably 97 parts by mass or less, and further preferably 95 parts by mass or less based on 100 parts by mass of the second resin composition. As the polyamide 6, polyamide 6 which is the same as the polyamide 6 to be used in the first resin composition can be used.

The second resin composition forming the B layer may include a polyamide-based resin other than polyamide 6. Examples of the polyamide-based resin other than polyamide 6 include polymetaxylylene adipamide (polyamide MXD6) resin, polyamide 11, polyamide 12, and polyamide 66. When the second resin composition includes a polyamide-based resin other than polyamide 6, the content thereof is preferably 1 part by mass or more and 30 parts by mass or less, more preferably 3 parts by mass or more and 20 parts by mass or less, and particularly preferably 5 parts by mass or more and 10 parts by mass or less based on 100 parts by mass of the second resin composition. Owing to including such a polyamide-based resin in an amount of 1 part by mass or more, slipperiness of the film can be imparted. On the other hand, when the content is more than 30 parts by mass, the effect of improving the slipperiness of the film may be saturated. As the polyamide-based resin other than polyamide 6, polymetaxylylene adipamide (polyamide MXD6) resin is preferably used.

The second resin composition forming the B layer may include a copolymerized polyamide resin such as polyamide 6·12 copolymer resin or polyamide 6·66 copolymer resin for the purpose of improving adhesion to a sealant film.

The second resin composition forming the B layer may include a polyamide resin containing a part derived from biomass. As the polyamide resin containing a part derived from biomass, polyamide 11, polyamide 610, polyamide 1010, and polyamide 410 are preferably used.

When the biaxially stretched polyamide film is used on the exterior surface side of a packaging bag as one embodiment of the present invention, the B layer is required to have friction pinhole resistance. Preferably, the second resin composition forming the B layer is substantially free of any flexing agent. When the second resin composition is substantially free of any flexing agent, the friction pinhole resistance of the film can be obtained. In addition, since the second resin composition is substantially free of any flexing agent, the lamination strength of a film can be improved, and the generation of thermally deteriorated matter can be inhibited. Here, the phrase "is substantially free of any flexing agent" means that the second resin composition does not contain a flexing agent at all, or the second resin composition contains a flexing agent in an amount of 0.01% by mass or less in 100% by mass of the second resin composition.

The second resin composition forming the B layer may contain a fine particle, an organic lubricant, or the like as a lubricant in order to improve film slipperiness. When the slipperiness is improved, the handleability of the film is improved, and bag breakage of a packaging bag due to rubbing can be reduced.

The fine particle mentioned above can be selected from an inorganic fine particle such as silica, kaolin, or zeolite, a polymeric organic fine particle such as an acrylic fine particle or an polystyrene-based fine particle, and the like. From the viewpoint of transparency and slipperiness, it is preferable to use a silica fine particle.

An average particle diameter of the fine particle is preferably 0.5 $\mu$m or more and 5.0 $\mu$m or less, and more preferably 1.0 $\mu$m or more and 3.0 $\mu$m or less. When the average particle diameter is 0.5 $\mu$m or more, good slipperiness can be expected, and when the average particle diameter is 5.0 $\mu$m or less, it can be expected to prevent improper appearance due to an increase in surface roughness of the film.

When a silica fine particle is used as the fine particle, the range of the pore volume of silica is preferably 0.5 ml/g or more and 2.0 ml/g or less, and more preferably 0.8 ml/g or more and 1.6 ml/g or less.

As the organic lubricant, a fatty acid amide and/or a fatty acid bisamide can be used. Examples of the fatty acid amide and/or the fatty acid bisamide include erucamide, stearamide, ethylenebis stearamide, ethylenebis behenamide, and ethylenebis oleamide. The content of the fatty acid amide and/or the fatty acid bisamide contained in the second resin composition forming the B layer is preferably 0.01 parts by mass or more and 0.40 parts by mass or less, and more preferably 0.05 parts by mass or more and 0.30 parts by mass or less based on 100 parts by mass of the second resin composition. When the content is 0.01 parts by mass or more, the effect of slipperiness can be expected. When the content is 0.40 parts by mass or less, the wettability of a printing ink when a print layer is provided on the B layer side can be secured.

The B layer may contain various additives such as other thermoplastic resins, lubricants, heat stabilizers, antioxidants, antistatic agents, antifogging agents, ultraviolet absorbers, dyes, and pigments.

[Biaxially stretched polyamide film]

The biaxially stretched polyamide film of one or more embodiments of the present invention is a film including at least two layers of A layer and B layer, and a preferred embodiment is a two-layer structure of A layer/B layer or a three-layer structure of B layer/A layer/B layer.

The thickness of the biaxially stretched polyamide film of one or more embodiments of the present invention is not particularly limited, and when the biaxially stretched polyamide film is used as a packaging material, the thickness is usually 100 $\mu$m or less. A biaxially stretched polyamide film having a thickness of 5 to 50 $\mu$m is commonly used, and particularly, one having a thickness of 8 to 30 $\mu$m is used.

The thickness of the A layer is preferably 50% or more and 90% or less, and particularly preferably 60% or more and 80% or less where the total thickness of the A layer and the B layer (when there are a plurality of A layers and B layers, the total thickness of these layers) is 100%. By setting the thickness of the A layer to 50% or more, it is possible to impart bending pinhole resistance. By setting the thickness of the A layer to 90% or less, it is possible to impart abrasion pinhole resistance in the B layer.

The biaxially stretched polyamide film of the present invention is superior in bending pinhole resistance, and the biaxially stretched polyamide film has 5 or less pinhole defects when the film is subjected to a twist bending test 1000 times at a temperature of 1°C using a Gelbo flex tester. The number of pinhole defects is more preferably 3 or less. The smaller the number of pinhole defects after the bending test, the better the bending pinhole resistance. When the number of pinholes is 5 or less, a packaging bag is obtained in which pinholes are less likely to be generated even when a load is applied to the packaging bag during transportation or the like.

The biaxially stretched polyamide film of one or more embodiments of the present invention is superior in friction pinhole resistance, and the distance to generation of pinholes is preferably 2900 cm or more in a friction pinhole resistance test by the measurement method described in Examples. The distance to generation of pinholes is more preferably 3100 cm or more, and still more preferably 3300 cm or more. The longer the distance at which a pinhole is generated, the better the friction pinhole resistance is. When the distance at which a pinhole is generated is 2900 cm or more, a packaging bag is obtained in which a pinhole is less likely to be generated even when the packaging bag is rubbed against a corrugated cardboard box or the like during transportation or the like.

The biaxially stretched polyamide film of one or more embodiments of the present invention is characterized by being superior in both the above-described bending pinhole resistance and friction pinhole resistance. The biaxially stretched polyamide film of one or more embodiments of the present invention having these characteristics is extremely useful as a packaging film because pinholes are hardly generated during transportation.

The biaxially stretched polyamide film of one or more embodiments of the present invention preferably exhibits a thermal shrinkage ratio on heating at 160°C for 10 minutes in a range of 0.6% or more and 3.0% or less, more preferably 0.6% or more and 2.5% or less in both the machine direction (hereinafter abbreviated as MD direction) and the traverse direction (hereinafter abbreviated as TD direction). When the thermal shrinkage ratio is 3.0% or less, it is possible to inhibit the occurrence of curling or shrinkage when heat is applied in a following step such as lamination or printing. Although it is possible to set the thermal shrinkage ratio to less than 0.6%, the film may be mechanically brittle. In addition, productivity may deteriorate.

The impact strength of the biaxially stretched polyamide film of one or more embodiments of the present invention is preferably 0.7 J/15 μm or more, more preferably 0.9 J/15 μm or more.

The piercing strength of the film of one or more embodiments of the present invention is preferably 0.67 N/μm or more. By setting the piercing strength to 0.67 N/μm or more, even when solid contents or the like are filled, it is possible to inhibit a hole from being formed in the bag due to the contents piercing the bag or a hole from being formed in the bag due to an external factor during transportation.

The biaxially stretched polyamide film of one or more embodiments of the present invention preferably has a haze value of 10% or less. The haze value is more preferably 7% or less, and still more preferably 5% or less. When the haze value is small, transparency and gloss are good; therefore, when the film is used for a packaging bag, clear printing can be applied thereon and the commercial value is increased. When a particle is added to improve the slipperiness of the film, the haze value increases, and therefore it is preferable to incorporate the fine particle only in the B layer in order to achieve a small haze value.

The biaxially stretched polyamide film of one or more embodiments of the present invention preferably has a lamination strength of 4.0 N/15 mm or more after being bonded to a polyethylene-based sealant film. The biaxially stretched polyamide film is usually laminated with a sealant film and then processed into a packaging bag. With a laminate strength of 4.0 N/15 mm or more, when a packaging bag is produced using the biaxially stretched polyamide film of one or more embodiments of the present invention in various lamination configurations, the strength of a sealed part can be sufficiently attained and a packaging bag that is hardly broken can be obtained.

[Method for producing biaxially stretched polyamide film]

A method for producing the biaxially stretched polyamide film of one or more embodiments of the present invention will be described.

First, a raw material resin is melt-extruded using an extruder, extruded through a T-die into a film, cast on a cooling roll, and cooled to afford an unstretched film in which at least A layer and B layer are laminated. In order to obtain an unstretched laminated film, a co-extrusion method using a feed block, a multi-manifold, or the like is preferable. In addition to the co-extrusion method, a dry lamination method, an extrusion lamination method, or the like may also be chosen. When the layers are laminated by a co-extrusion method, it is desirable to minimize the difference in melt viscosity between the first resin composition for forming A layer and the second resin composition for forming B layer.

The melting temperature of the resin is preferably 220°C or more and 350°C or less. When the melting temperature is lower than the above, unmelted matter or the like is generated, and improper appearance such as defects may occur, and when the melting temperature exceeds the above, deterioration of the resin or the like is observed, and a decrease in molecular weight or a deterioration in appearance may occur. The die temperature is preferably 250°C or more and 350°C or less. The temperature of the cooling roll is preferably -30°C or more and 80°C or less, and more preferably 0°C or more and 50°C or less. In order to obtain an unstretched film by casting the film-shaped melt extruded through the T die on a rotary cooling drum and cooling the cast material, for example, a method using an air knife, an electrostatic adhesion method in which electrostatic charge are applied, or the like can be preferably applied. It is preferable to cool the opposite surface of the cast unstretched film from the cooling roll as well. For example, it is preferable to use in combination a method in which a cooling liquid contained in a tank is brought into contact with an opposite surface of the unstretched film from the cooling roll, a method in which an evaporating liquid is applied with a spray nozzle, a method in which a high speed fluid is blown to cool the unstretched film, or so on. The unstretched film thus obtained is biaxially stretched to afford the biaxially stretched polyamide film of one or more embodiments of the present invention.

The stretching method may be either a simultaneous biaxial stretching method or a sequential biaxial stretching method. The sequential biaxial stretching method is preferable because the film formation speed can be increased and therefore it is advantageous in terms of production cost. In any case, one-stage stretching or multi-stage stretching such as two-stage stretching can be used as the stretching method in the MD direction. As described later, stretching in the MD direction not by one-stage stretching but by multi-stage stretching such as two-stage stretching is preferable in terms of physical properties and uniformity (isotropy) of physical properties in the MD direction and the TD direction. The stretching in the MD direction in the sequential biaxial stretching method is preferably roll stretching.

The lower limit of the stretching temperature in the MD direction is preferably 50°C, more preferably 55°C, and still more preferably 60°C. When the stretching temperature is lower than 50°C, the resin is not softened, and stretching may be difficult. The upper limit of the stretching temperature in the MD direction is preferably 120°C, more preferably 115°C, and still more preferably 110°C. If the stretching temperature exceeds 120°C, the resin may become excessively soft and may not be stably stretched.

The lower limit of the stretch ratio in the MD direction (when stretching is performed in multiple stages, the total stretch ratio calculated by multiplying the respective stretch ratios is adopted) is preferably 2.2 times, more preferably 2.5 times, and still more preferably 2.8 times. When the stretch ratio in the MD direction is less than 2.2 times, the thickness accuracy in the MD direction may be lowered, and the degree of crystallinity may be excessively low to lower the impact strength. The upper limit of the stretch ratio in the MD direction is preferably 5.0 times, more preferably 4.5 times, and most preferably 4.0 times. When the stretch ratio in the MD direction exceeds 5.0 times, subsequent stretching may be difficult.

When stretching in the MD direction is performed in multiple stages, stretching in each stage can be performed as described above, but it is necessary to adjust the stretch ratio such that the product of all the stretch ratios in the MD direction is 5.0 or less. For example, in the case of two-stage stretching, it is preferable that the stretch ratio in the first stage be set from 1.5 times to 2.1 times and the stretch ratio in the second stage be set between 1.5 times and 1.8 times.

The film stretched in the MD direction is stretched in the TD direction with a tenter, heat-set, and subjected to relaxation treatment. The lower limit of the stretching temperature in the TD direction is preferably 50°C, more preferably 55°C, and still more preferably 60°C. When the stretching temperature is lower than 50°C, the resin is not softened, and stretching may be difficult. The upper limit of the stretching temperature in the TD direction is preferably 190°C, more preferably 185°C, and still more preferably 180°C. When the stretching temperature in the TD direction exceeds 190°C, the film is crystallized, and stretching may be difficult.

The lower limit of the stretch ratio in the TD direction (when stretching is performed in multiple stages, the total stretch ratio calculated by multiplying the respective stretch ratios is adopted) is preferably 2.8, more preferably 3.2 times, still more preferably 3.5 times, and particularly preferably 3.8 times. When the stretch ratio in the TD direction is less than 2.8 times, the thickness accuracy in the TD direction may be lowered, and the degree of crystallinity may be excessively low to lower the impact strength. The upper limit of the stretch ratio in the TD direction is preferably 5.5 times, more preferably 5.0 times, still more preferably 4.7, particularly preferably 4.5 times, and most preferably 4.3 times. When the stretch ratio in the TD direction exceeds 5.5 times, productivity may be significantly reduced.

The lower limit of the heat setting temperature is preferably 210°C, and more preferably 212°C. When the heat setting temperature is low, the thermal shrinkage ratio becomes excessively large, so that the appearance after lamination tends to be deteriorated and the lamination strength tends to decrease. The upper limit of the heat setting temperature is preferably 220°C, and more preferably 218°C. When the heat setting temperature is excessively high, the impact strength tends to decrease. The heat setting time is preferably 0.5 to 20 seconds. Further preferably, the heat fixation time is 1 to 15 seconds. The heat setting time can be set to an appropriate time depending on the heat setting temperature and the wind speed in a heat setting zone. When the heat setting conditions are excessively weak, crystallization and orientation relaxation become insufficient, and the problems described above will occur. If the heat setting conditions are excessively strong, the film toughness is deteriorated.

Relaxation treatment after heat setting treatment is effective for controlling the thermal shrinkage ratio. The temperature at which the relaxation treatment is performed can be selected within a range from the heat setting treatment temperature to the Tg of the resin, and is preferably (heat setting treatment temperature (°C) - 10)°C or more and (Tg (°C) + 10)°C or less. An excessively high relaxation temperature is unfavorable because it leads to an excessively high shrinkage rate and will cause strain and so on. On the other hand, when the relaxation temperature is excessively low, the operation does not serve as relaxation treatment, merely loosen the film, and fails to reduce the thermal shrinkage ratio does, resulting in poor dimensional stability. The lower limit of the relaxation ratio in the relaxation treatment is preferably 0.5%, and more preferably 1%. When the relaxation ratio is less than 0.5%, the thermal shrinkage ratio may not be sufficiently reduced. The upper limit of the relaxation ratio is preferably 20%, more preferably 15%, and still more preferably 10%. When the relaxation ratio exceeds 20%, sagging may occur in a tenter, and production may be difficult.

The biaxially stretched polyamide film of one or more embodiments of the present invention can also be subjected to heat treatment or damp control treatment for improving dimensional stability depending on the application. In addition, it is also possible to perform corona treatment, coating treatment, flame treatment, or the like in order to improve the adhesiveness of a film surface, or to perform printing processing or vapor deposition processing with a metal material, an inorganic oxide, or the like.

In one embodiment of the present invention, the biaxially stretched polyamide film is processed into a laminated film in which a sealant film is laminated, and thus a packaging material is provided. Examples of the sealant film include an unstretched linear low-density polyethylene (LLDPE) film, an unstretched polypropylene (CPP) film, and an ethylene-nevinyl alcohol copolymer resin (EVOH) film. The sealant film may be laminated in direct contact with the biaxially stretched polyamide film, or may be laminated with another layer such as an adhesive layer interposed therebetween. The packaging material may include a print layer. The packaging material of one or more embodiments of the present invention is made into a bag and processed into a packaging bag.

In another embodiment of the present invention, the biaxially stretched polyamide film is processed into a laminated film in which a metal layer and a sealant film are laminated, and thus a packaging material for a battery exterior material is provided. Examples of the metal of the metal layer include various metal elements (aluminum, iron, copper, nickel, and the like), and an aluminum layer is particularly preferable. The metal layer may be laminated in direct contact with the biaxially stretched polyamide film of one or more embodiments of the present invention, or may be laminated with another layer such as an adhesive layer interposed therebetween. The battery packaging material of one or more embodiments of the present invention may include a print layer. Since the biaxially stretched polyamide film of one or more embodiments of the present invention is superior in impact resistance, bending pinhole resistance, and abrasion pinhole resistance, the biaxially stretched polyamide film is suitable as a material for battery exteriors which are required to have high strength and durability.

EXAMPLES

Films were evaluated by the following measurement methods. Unless otherwise specified, the measurement was performed in a measurement chamber with an environment of 23°C and a relative humidity of 65%.

(1) Haze value of film

The haze value was measured in accordance with JIS K 7105 using a direct reading haze meter manufactured by Toyo Seiki Seisaku-sho, Ltd.

(2) Thickness of film

A film is equally divided into 10 portions in the TD direction (as for a film narrow in width, the film was cut into equal parts such that a width that allows a measurement of a thickness can be ensured). The resulting 10 films are stacked one on another and cut out into a length of 100 mm in the MD direction, followed by conditioning in an environment having a temperature of 23°C and a relative humidity of 65% for 2 hours or more. The thickness of the center of each sample was measured with a thickness gauge manufactured by Tester Sangyo Co., Ltd., and the average value of the measurements was taken as a thickness.

(3) Thermal shrinkage ratio of film

The thermal shrinkage ratio was measured by the following equation in accordance with the dimensional change test method described in JIS C2318 except that the test temperature was set to 160°C and the heating time was set to 10 minutes.

Thermal shrinkage ratio = [(length before treatment - length after treatment)/length before treatment] $\times$ 100 (%)

(4) Impact strength of film

The impact strength was measured using a film impact tester manufactured by Toyo Seiki Seisaku-sho, Ltd. The measured value was converted into a value in terms of 15 $\mu$m thickness and represented in J (joule)/15 $\mu$m.

(5) Dynamic friction coefficient of film

The dynamic friction coefficient between the outer surfaces of film rolls was evaluated in accordance with JIS C2151 under the following conditions. The size of a test piece was 130 mm in width and 250 mm in length, and the test speed was 150 mm/min.

(6) Piercing strength of film

The piercing strength of a film was measured in accordance with "2. Strength test method" of "Specifications and Standards for Food, Food Additives, etc. III: Apparatus and containers and packaging" (Ministry of Health and Welfare Notification No. 20, 1982) in Food Sanitation Act. The film was pierced with a needle having a tip diameter of 0.7 mm at a piercing speed of 50 mm/min, and the strength when the needle penetrated the film was measured, and taken as a piercing strength. The measurement was performed at normal temperature (23°C), and the value obtained by dividing the obtained piercing strength (unit: N) of the film by the actual thickness of the film was taken as piercing strength (unit: N/$\mu$m).

(7) Degree of plane orientation of film

For a sample cut out from the central portion of a film, the refractive index (nx) in the machine direction of the film and the refractive index (ny) in the transverse direction of the film were measured by Method A of JIS K 7142-1996 with sodium D-rays as a light source using an Abbe refractometer, and a plane orientation coefficient was calculated by a calculation equation as formula (1).

$$\text{Plane orientation coefficient } (\Delta P) = (nx + ny)/2 - nz \quad (1)$$

(8) Tensile modulus of film

An obtained biaxially stretched polyamide film was allowed to stand for 2 hours in a room adjusted to 23°C and a relative humidity of 50% RH, and then cut into a strip shape having 150 mm (a gauge length: 100 mm) in measurement direction which is the MD direction or TD direction of the film and 15 mm in a direction perpendicular to the measurement direction, thereby affording a sample. Using a tensile testing machine (AG-1, manufactured by Shimadzu Corporation) having a 1 kN load cell and a sample attached thereto, a tensile test was conducted at a test speed of 200 mm/min. The elastic modulus was calculated from the gradient of the obtained load-elongation curve. The measurement was performed on three samples, and the average value of the samples was calculated.

(9) Loss elastic modulus E" of film

Using a dynamic viscoelasticity analyzer (RSA-G2) manufactured by TA Instruments, measurement was performed under the following conditions and the loss elastic modulus E" of a film was derived.

Sample: A film was cut into a strip shape with the MD direction as a longitudinal direction, aged at 23°C and 50% RH for 1 hour, and then measured.
Measurement mode: tensile Distance between chucks: 20 mm
Frequency: 15 Hz
Strain: 0.12%
Measurement temperature: -50°C at start to 100°C at end Rate of raising
temperature: 5°C/min

In the obtained chart of loss elastic modulus E" versus temperature, the value at 1°C was defined as the loss elastic modulus E" of the film.

(10) Bending pinhole resistance of film

The number of bending fatigue pinholes was measured by the following method using a Gelbo flex tester manufactured by Rigaku Kogyo.
A polyester-based adhesive was applied to a biaxially stretched polyamide film produced in an Example, then a linear low-density polyethylene film (L-LDPE film: L4102, manufactured by Toyobo Co. Ltd.) having a thickness of 40 $\mu$m was dry-laminated thereon, and aging was performed in an environment of 40°C for 3 days, affording a laminated film. The obtained laminated film was cut into 12 inches × 8 inches and made into a cylindrical shape having a diameter of 3.5 inches. One end of the cylindrical film was fixed to the fixed head side of the Gelbo flex tester, the other end was fixed to the movable head side, and the initial gripping interval was set to 7 inches. A bending fatigue was applied 1000 times at a rate of 40 times/min such that a 440 degree twist was applied in the first 3.5 inches of a stroke and a straight horizontal motion was made in the subsequent 2.5 inches of the stroke to complete the entire stroke, and the number of pinholes generated in the laminated film was counted. The measurement was performed in an environment of 1°C. The test film was placed on a filter paper (Advantech, No. 50) with the L-LDPE film side thereof being a lower surface, and the four corners thereof were fixed with Cellotape (registered trademark). An ink (ink manufactured by PILOT Corporation (product number: INK-350-blue) diluted 5-fold with pure water) was applied to the test film and spread all over one surface of the test film using a rubber roller. After wiping off unnecessary ink, the test film was removed, and the number of ink dots on the filter paper was counted.

(11) Friction pinhole resistance of film

A friction test was performed by the following method using a fastness tester (Toyo Seiki Seisaku-sho, Ltd.), and a pinhole generation distance was measured.

A laminated film that was the same as one produced in the bending pinhole resistance evaluation described above was folded into quarters, and thus a test sample having sharpened corners was prepared. Then, the test sample was rubbed against an inner surface of a corrugated cardboard using the fastness tester at an amplitude of 25 cm and an amplitude rate of 30 times/min with a weight of 100 g. As the corrugated cardboard, one having K280 × P180 × K210 (AF) = (surface material liner × core material × back material liner (type of flute)) was used. A schematic view of a part of the measuring device is shown in Fig. 1.

The pinhole generation distance was calculated according to the following procedure. The longer the pinhole generation distance is, the better the friction pinhole resistance is.

First, a friction test was performed at an amplitude of 100 times and a distance of 2500 cm. When no pinhole was formed, a friction test was performed with the number of amplitudes increased by 20 times and with the distance increased by 500 cm. In addition, when still no pinhole was formed, a friction test was further performed with the number of amplitudes increased by 20 times and with the distance increased by 500 cm. This was repeated, and the distance at which a pinhole was opened was marked with × and defined as level 1.

When a pinhole was opened at an amplitude of 100 times and a distance of 2500 cm, a friction test was performed with the number of amplitudes decreased by 20 times and with the distance decreased by 500 cm. In addition, when a pinhole was opened, a friction test was further performed with the number of amplitudes decreased by 20 times and with the distance decreased by 500 cm. This was repeated, and the distance at which no pinhole was opened was marked with ∘ and defined as level 1.

Next, as level 2, in the case of being finally ∘ at level 1, a friction test was performed with the number of amplitudes increased by 20 times, and when no pinhole was formed, ∘ was given, and when a pinhole was opened, × was given. In the case of being finally × at level 1, a friction test was performed with the number of amplitudes decreased by 20 times, and when no pinhole was opened, ∘ was given, and when a pinhole was opened, × was given.

Furthermore, as levels 3 to 20, in the case of being ∘ at the previous level, a friction test was performed with the number of amplitudes increased by 20 times, and when no pinhole was opened, ∘ was given, and when a pinhole was opened, × was given. In the case of being × at the previous level, a friction test was performed with the number of amplitudes decreased by 20 times, and when no pinhole was opened, ∘ was given, and when a pinhole was opened, × was given. This was repeated, and levels 3 to 20 were marked with ∘ or x.

Next, the number of tests at each distance in which ∘ or × was given was counted.

The distance having the largest number of times of tests was set as a median, and a coefficient was set to zero. When a distance was longer than this distance, the coefficient was set to +1, +2, +3... per 500 cm, and when a distance was shorter than this distance, the coefficient was set to -1, -2, - 3 ... per 500 cm.

The number of tests in which no hole was opened and the number of tests in which a hole was opened were compared for all the tests from levels 1 to 20, and a friction pinhole generation distance was calculated by each of equations in the following cases A and B.

A; a case where, in all the tests, the number of tests in which no hole was opened is equal to or more than the number of tests in which a hole was opened Friction pinhole generation distance = median + 500 × (Σ(coefficient × number of tests in which no hole was opened)/number of tests in which no hole was opened) + 1/2)

B: a case where, in all the tests, the number of tests in which no hole was opened is less than the number of tests in which a hole was opened Friction pinhole generation distance = median + 500 × (Σ(coefficient × number of tests in which hole was opened)/number of tests in which hole was opened) - 1/2)

(12) Lamination strength

A laminated film made by a method similar to that described in the description of the bending pinhole resistance evaluation was cut into a strip shape having a width of 15 mm and a length of 200 mm. One end of the laminated film was peeled at the interface between the biaxially stretched polyamide film and the linear low-density polyethylene film. The lamination strength was measured 3 times in the MD and TD directions, respectively, using an autograph (manufactured by Shimadzu Corporation) under a condition of a temperature of 23°C, a relative humidity of 50%, a tensile speed of 200 mm/min, and a peeling angle of 90°. The lamination strength was evaluated by the average value of the measurements.

(13) Cycle of generation of thermally deteriorated matter to be generated at die lip outlet

After the lip of the die was cleaned, film formation was started, and the time taken until a thermally deteriorated matter was generated at the lip of the die was observed.

A: Even after film formation for 36 hours or more, no thermally deteriorated matter is generated, and no foreign matter adheres to a film.
B: Thermally deteriorated matter adheres to the lip of the die between 24 and 36 hours.
C: Thermally deteriorated matter adheres to the lip of the die within 24 hours, and foreign matter is generated on a film.

(14) Relative viscosity of raw material polyamide

A polyamide solution was prepared by dissolving 0.25 g of polyamide in 96% sulfuric acid in a 25 ml measuring flask so as to have a concentration of 1.0 g/dl, and a relative viscosity was measured at 20°C using the polyamide solution.

(15) Melting point of raw material polyamide

Measurement was performed in accordance with JIS K7121 using a SSC5200 type differential scanning calorimeter manufactured by Seiko Instruments Inc., in a nitrogen atmosphere with a sample weight of 10 mg, a heating starting temperature of 30°C, and a rate of raising temperature of 20°C/min, and an endothermic peak temperature ($T_{mp}$) was determined as a melting point.

(Example 1)

Using a device including two extruders and a co-extruding T-die having a width of 380 mm, lamination was performed in B layer/A layer/B layer configuration by a feed block method, and melted resins of resin compositions described below were extruded from the T-die into a film shape, and were cast and electrostatically adhered to a cooling roll adjusted to 20°C, affording an unstretched film having a thickness of 200 $\mu$m.

The resin compositions of the A layer and the B layer are as follows.

Resin composition forming A layer:

Polyamide 6 (manufactured by Toyobo Co., Ltd., relative viscosity: 2.8, melting point: 220°C) 95 parts by mass;
Polybutylene terephthalate adipate (trade name "ECOFLEX" manufactured by BASF, glass transition temperature: -31.3°C, melting point: 120°C) 5 parts by mass

Resin composition forming B layer:

Polyamide 6 (manufactured by Toyobo Co., Ltd., relative viscosity: 2.8, melting point: 220°C) 90 parts by mass;
Polyamide MXD6 (manufactured by Mitsubishi Gas Chemical Company, Inc., relative viscosity: 2.1, melting point: 237°C) 10 parts by mass;
Porous silica fine particle (manufactured by Fuji Silysia Chemical Ltd., average particle diameter: 2.0 $\mu$m, pore volume: 1.6 ml/g) 0.54 parts by mass;
Fatty acid bisamide (ethylenebis stearamide manufactured by Kyoeisha Chemical Co., Ltd.) 0.15 parts by mass

The structure of the feed block and the discharge quantities of the extruders were adjusted such that the biaxially stretched polyamide film had a total thickness of 15 μm, the A layer had a thickness of 9 μm, and the B layer on each of the front and back sides had a thickness of 3 μm.

The obtained unstretched film was guided to a roll-type stretching machine. The unstretched film was stretched 1.73 times at 80°C in the MD direction and then further stretched 1.85 times at 70°C utilizing the difference between the circumferential speeds of rollers. Subsequently, this uniaxially stretched film was guided continuously to a tenter-type stretching machine and preheated at 110°C. Then, the uniaxially stretched film was stretched 1.2 times at 120°C in the TD direction, 1.7 times at 130°C, and 2.0 times at 160°C, and subjected to a heat setting treatment at 218°C and then a 7% relaxation treatment at 218°C. Then, corona discharge treatment was performed on the surface on the side on which a linear low-density polyethylene film was to be dry-laminated, affording a biaxially stretched polyamide film. The evaluation results of the obtained biaxially stretched polyamide film are shown in Table 2.

(Examples 2 to 5)

Biaxially stretched polyamide films were obtained in the same manner as in Example 1 except that the resin compositions of the A layer and the B layer and the film formation conditions such as the heat setting temperature were changed as shown in Table 1. The evaluation results of the obtained biaxially stretched films are shown in Table 1.

[Table 1]

| | | | Example | | | | |
|---|---|---|---|---|---|---|---|
| | | | 1 | 2 | 3 | 4 | 5 |
| A layer | Polyamide 6 | Parts by mass | 92 | 96 | 92 | 88 | 80 |
| | Flexing agent | Parts by mass | 5 | 4 | 8 | 12 | 20 |
| B layer | Polyamide 6 | Parts by mass | 90 | 90 | 90 | 90 | 90 |
| | Flexing agent | Parts by mass | - | - | - | - | - |
| | Polyamide MXD6 | Parts by mass | 10 | 10 | 10 | 10 | 10 |
| | Fine particle | Parts by mass | 0.54 | 0.54 | 0.54 | 0.54 | 0.54 |
| | Fatty acid amide | Parts by mass | 0.15 | 0.15 | 0.15 | 0.15 | 0.15 |
| Total thickness | | μm | 15 | 15 | 15 | 15 | 15 |
| Thickness of base material layer | | μm | 9 | 12 | 12 | 12 | 12 |
| Lamination configuration | | - | B/A/B | B/A/B | B/A/B | B/A/B | B/A/B |
| Haze | | % | 1.7 | 1.8 | 2.3 | 2.6 | 3.3 |
| Tensile modulus | MD | GPa | 2.2 | 2.7 | 2.2 | 2.5 | 2.0 |
| | TD | GPa | 1.3 | 1.6 | 1.3 | 1.4 | 1.1 |
| Dynamic friction coefficient | | - | 0.60 | 0.70 | 0.60 | 0.50 | 0.60 |
| Impact strength | | J/15μm | 1.3 | 1.3 | 1.3 | 1.4 | 1.4 |
| Piercing strength | | N/μm | 0.77 | 0.83 | 0.77 | 0.81 | 0.81 |
| Plane orientation coefficient | | - | 0.061 | 0.062 | 0.061 | 0.061 | 0.061 |
| Loss elastic modulus E" | | $\times 10^8$ Pa | 1.13 | 1.14 | 1.21 | 1.25 | 1.23 |
| Bending pinhole resistance | | Number | 4 | 2 | 0 | 1 | 1 |
| Friction pinhole resistance | | cm | 5300 | 4800 | 4200 | 3800 | 3200 |
| Thermal shrinkage ratio | MD | % | 1.2 | 1.3 | 1.2 | 1.4 | 1.2 |
| | TD | % | 1.5 | 1.6 | 1.5 | 1.5 | 1.6 |
| Lamination strength | MD | N/mm | 6.5 | 7.0 | 6.5 | 6.0 | 6.1 |
| | TD | N/mm | 6.4 | 6.3 | 6.3 | 5.9 | 6.3 |

(continued)

| | | | Example | | | | |
|---|---|---|---|---|---|---|---|
| | | | 1 | 2 | 3 | 4 | 5 |
| Cycle of generation of thermally deteriorated matter | | h r | A | A | A | A | A |

As the film of each Example, a film having both good bending pinhole resistance and good friction pinhole resistance was obtained. In addition, the films had a low haze and good transparency, also had high impact strength and piercing strength, had high lamination strength with a sealant film, and were superior as a packaging film. Moreover, even in film formation for a long time, deteriorated matter did not adhere to the lip of the die, so that stable film formation was possible.

(Comparative Examples 1 to 5)

Biaxially stretched polyamide films were obtained in the same manner as in Example 1 except that the resin compositions of the A layer and the B layer and the film formation conditions such as the heat setting temperature were changed as shown in Table 2. The evaluation results of the obtained biaxially stretched films are shown in Table 2.

[Table 2]

| | | | Comparative Example | | | | |
|---|---|---|---|---|---|---|---|
| | | | 1 | 2 | 3 | 4 | 5 |
| A layer | Polyamide 6 | Parts by mass | 100 | 98 | 94 | 91 | 84 |
| | Flexing agent | Parts by mass | - | 2 | 6 | 9 | 16 |
| B layer | Polyamide 6 | Parts by mass | 90 | 88 | 84 | 81 | 74 |
| | Flexing agent | Parts by mass | - | 2 | 6 | 9 | 16 |
| | Polyamide MXD6 | Parts by mass | 10 | 10 | 10 | 10 | 10 |
| | Fine particle | Parts by mass | 0.54 | 0.54 | 0.54 | 0.54 | 0.54 |
| | Fatty acid amide | Parts by mass | 0.15 | 0.15 | 0.15 | 0.15 | 0.15 |
| Total thickness | | $\mu$m | 15 | 15 | 15 | 15 | 15 |
| Thickness of base material layer | | $\mu$m | 12 | 12 | 12 | 12 | 12 |
| Lamination configuration | | - | B/A/B | B/A/B | B/A/B | B/A/B | B/A/B |
| Haze | | % | 1.2 | 1.5 | 2.2 | 2.5 | 3.3 |
| Tensile modulus | MD | GPa | 2.8 | 2.5 | 2.3 | 2.4 | 2.4 |
| | TD | GPa | 1.7 | 1.5 | 1.6 | 1.5 | 1.5 |
| Dynamic friction coefficient | | - | 0.60 | 0.60 | 0.60 | 0.60 | 0.60 |
| Impact strength | | J/15$\mu$m | 1.3 | 1.4 | 1.3 | 1.3 | 1.3 |
| Piercing strength | | N/$\mu$m | 0.83 | 0.80 | 0.80 | 0.83 | 0.83 |
| Plane orientation coefficient | | - | 0.062 | 0.061 | 0.062 | 0.061 | 0.061 |
| Loss elastic modulus E" | | $\times 10^8$ Pa | 0.85 | 1.08 | 1.18 | 1.23 | 1.26 |
| Bending pinhole resistance | | Number | 18 | 8 | 1 | 1 | 1 |
| Friction pinhole resistance | | cm | 6000 | 4200 | 2000 | 1200 | 1000 |
| Thermal shrinkage ratio | MD | % | 1.0 | 1.3 | 1.4 | 1.2 | 1.2 |
| | TD | % | 1.8 | 1.7 | 1.6 | 1.5 | 1.5 |
| Lamination strength | MD | N/mm | 7.2 | 4.5 | 4.1 | 4.5 | 4.1 |
| | TD | N/mm | 6.8 | 4.3 | 4.6 | 4.6 | 4.2 |

(continued)

|  |  | Comparative Example | | | | |
| --- | --- | --- | --- | --- | --- | --- |
|  |  | 1 | 2 | 3 | 4 | 5 |
| Cycle of generation of thermally deteriorated matter | h r | A | C | C | C | C |

The biaxially stretched polyamide film containing no flexing agent of Comparative Example 1 was poor in bending pinhole resistance. Although Comparative Example 2 contained a flexing agent, the loss elastic modulus E" was small, so that the bending pinhole resistance was poor. Further, since the B layer also contained a flexing agent, the laminate strength and the cycle of generation of thermally deteriorated matter were poor.

In Comparative Examples 3, 4, and 5, the amount of the flexing agent was sufficient, the loss elastic modulus E" was $1.1 \times 10^8$ Pa or more, and the bending pinhole resistance was good, but since the B layer also contained the flexing agent, the products were poor in a friction pinhole property. In addition, deteriorated matter adhered to the lip of the die during the extrusion process.

DESCRIPTION OF REFERENCE SIGNS

1: head of fastness tester
2: corrugated cardboard
3: mount for holding sample
4: film sample folded into quarters
5: rubbing amplitude direction

**Claims**

1. A biaxially stretched polyamide film comprising at least two layers of A layer and B layer each formed of a resin composition including polyamide 6,
   wherein

   the A layer contains a flexing agent and the B layer is substantially free of any flexing agent, and
   the biaxially stretched polyamide film exhibits a loss elastic modulus E" of $1.1 \times 10^8$ Pa or more at 1°C in dynamic viscoelasticity measurement under conditions including a tensile mode, a distance between chucks of 20 mm, a frequency of 15 Hz, and a rate of raising temperature of 5°C/min using a viscoelasticity analyzer.

2. The biaxially stretched polyamide film according to claim 1, wherein the flexing agent is an aliphatic aromatic copolymerized polyester.

3. The biaxially stretched polyamide film according to claim 2, wherein the flexing agent is an aliphatic aromatic copolymerized polyester containing an adipic acid component.

4. The biaxially stretched polyamide film according to any one of claims 1 to 3, wherein the B layer includes polymetaxylylene adipamide.

5. The biaxially stretched polyamide film according to any one of claims 1 to 4, wherein the A layer and the B layer are laminated in an order of B layer/A layer/B layer.

6. A packaging material comprising the biaxially stretched polyamide film according to any one of claims 1 to 5 and a sealant film.

7. A battery packaging material comprising the biaxially stretched polyamide film according to any one of claims 1 to 5, a metal layer, and a sealant film.

8. A packaging bag comprising the biaxially stretched polyamide film according to any one of claims 1 to 5.

[FIG. 1]

## INTERNATIONAL SEARCH REPORT

| International application No. |
|---|
| **PCT/JP2022/034983** |

**A.    CLASSIFICATION OF SUBJECT MATTER**

*B32B 27/34*(2006.01)i; *B32B 27/18*(2006.01)i; *B65D 65/40*(2006.01)i
FI:    B32B27/34; B65D65/40 D; B32B27/18 Z

According to International Patent Classification (IPC) or to both national classification and IPC

**B.    FIELDS SEARCHED**

Minimum documentation searched (classification system followed by classification symbols)

B32B1/00-43/00; B65D1/00-90/66; H01M4/00-50/77

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2020-111050 A (GUNZE KK) 27 July 2020 (2020-07-27)<br>paragraphs [0002]-[0006], [0024], [0033]-[0034], [0040], [0051]-[0054], [0094], [0101]-[0124], examples, tables | 1-8 |
| Y | JP 11-334007 A (TOYO BOSEKI) 07 December 1999 (1999-12-07)<br>paragraphs [0003], [0005], [0012]-[0023], examples, tables | 1-8 |
| Y | JP 2020-163587 A (TOYOBO CO., LTD.) 08 October 2020 (2020-10-08)<br>paragraphs [0002], [0017], [0020], [0025], [0047]-[0066], examples, tables | 1-8 |
| Y | JP 2003-113259 A (TORAY IND INC) 18 April 2003 (2003-04-18)<br>paragraph [0029] | 1-8 |
| Y | JP 2002-127337 A (UNITIKA LTD) 08 May 2002 (2002-05-08)<br>paragraphs [0002], [0013] | 2-3 |
| Y | JP 2018-196929 A (SHOWA DENKO PACKAGING CO LTD) 13 December 2018 (2018-12-13)<br>claims | 7 |

☑ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 November 2022** | **29 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/034983** |

**C.    DOCUMENTS CONSIDERED TO BE RELEVANT**

| Category* | Citation of document, with indication, where appropriate, of the relevant passages | Relevant to claim No. |
| --- | --- | --- |
| Y | WO 2017/217436 A1 (UNITIKA LTD) 21 December 2017 (2017-12-21) claims, paragraph [0095], fig. 7 | 7 |
| P, X | WO 2021/200489 A1 (TOYOBO CO., LTD.) 07 October 2021 (2021-10-07) entire text | 1-8 |

**INTERNATIONAL SEARCH REPORT**
**Information on patent family members**

| | International application No. |
|---|---|
| | **PCT/JP2022/034983** |

| Patent document cited in search report | | | Publication date (day/month/year) | Patent family member(s) | Publication date (day/month/year) |
|---|---|---|---|---|---|
| JP | 2020-111050 | A | 27 July 2020 | (Family: none) | |
| JP | 11-334007 | A | 07 December 1999 | (Family: none) | |
| JP | 2020-163587 | A | 08 October 2020 | (Family: none) | |
| JP | 2003-113259 | A | 18 April 2003 | (Family: none) | |
| JP | 2002-127337 | A | 08 May 2002 | (Family: none) | |
| JP | 2018-196929 | A | 13 December 2018 | (Family: none) | |
| WO | 2017/217436 | A1 | 21 December 2017 | TW 201811567 A<br>claims, paragraph [0095], fig. 7 | |
| WO | 2021/200489 | A1 | 07 October 2021 | TW 202142403 A<br>entire text | |

Form PCT/ISA/210 (patent family annex) (January 2015)

**EP 4 410 548 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11254615 B

- WO 19131752 A